# EUROPEAN PATENT SPECIFICATION

(11) **EP 1 157 648 B1**
(45) Date of publication and mention of the grant of the patent: **11.06.2003**
(21) Application number: 00203314.0
(22) Date of filing: 22.09.2000
(51) Int. Cl.: A47J 36/04

(54) **Receptacle for cooking food**
Gefäss zum Kochen von Nahrungsmitteln
Récipient pour cuire des aliments

(30) Priority: 25.05.2000 US 578839
(43) Date of publication of application: 28.11.2001
(73) Proprietor: Lekue, S. L., 08120 La Llagosta (ES)
(72) Inventor: Llorente Hompanera, José Maria, 08391 Tiana (ES)
(74) Representative: Ponti Sales, Adelaida

(56) References cited:
- US-A- 4 535 889
- US-A- 4 558 198
- US-A- 5 377 860
- US-A- 5 974 686
- US-A- 6 032 827

## Description

This invention relates to a receptacle for cooking foods, which can be used within a wide range of temperatures, from the temperatures usual in freezers to the temperatures usual for cookers, while maintaining a hermetic seal.

### BACKGROUND OF THE INVENTION

Known in the art are receptacles for cooking foods which comprise a base for containing the foods and a lid which fits onto that base, manufactured using different materials, but presenting some limitations according to the material used.

Firstly, there exist receptacles in which both the lid and the base are of ceramic material (such as porcelain) or of special glass (Pyrex type or the like) which withstand high cooking temperatures.

However, said receptacles do not normally close hermetically since the lid is rigid and does not form a perfect fit with the base. This means that the gases given off by the products when they are cooking emerge from the receptacle, so that the smells of the products escape into the atmosphere or can mix inside the oven in which the cooking is carried out.

Furthermore, receptacles of heat-resistant glass do not withstand sudden changes of temperature and cannot be transferred directly from the freezer to the oven, as in such situations they may even explode.

Secondly, there are receptacles with the base made of any of the materials cited or of plastic and with the lid made of plastic material. Said lid does permit a hermetic seal, since it can adapt to the base. Moreover, said receptacles withstand low temperatures well and can be kept without problem in refrigerators or freezers, though they do have the disadvantage that they do not withstand temperatures exceeding 120°C.

Patent US-A-4535889 describes a frozen food package according to the preamble of claim 1 having a semi-rigid plastic removable and replaceable dome lid for permitting reconstitution of the frozen food either in a conventional or a microwave oven. The dome lid has an annular seating flange overlapping and disengageably locked onto the rim of a rigid bottom tray by locking ribs spaced around the flange and engaged under the tray rim. A positive separating force can be applied to the tray and lid to quickly and easily unlock and separate them from one another without damage to either.

### DESCRIPTION OF THE INVENTION

The receptacle of the invention manages to resolve the aforesaid disadvantages, while presenting other advantages which will be described below.

The receptacle for cooking of the invention is characterised in accordance with claim 1.

Due to this, the receptacle can be used both for storing foods in a freezer and for cooking them in an oven, on a cooker or in a microwave oven. It also withstands perfectly well the high temperatures of other household appliances such as dishwashers.
Silicone is an elastic material that permits hermetic attachment of the lid to the base, is resistant to cold and to heat within a temperature range of -50°C and 300°C and is also resistant to ageing.

Preferably, the lid includes a valve that permits outlet of the gases that form inside the receptacle.

The pressure of the gases increases as the temperature increases and leads to opening of the valve. The valve prevents the pressure increase being able to cause deformation of the lid or its sudden opening leading to part of the food coming out.

Thanks to the valve it is possible to cook the food without any need to take the lid off the receptacle, so that the receptacle can go directly from the freezer into the oven or onto the cooker without any intermediate handling.

Advantageously, the lid of the receptacle is convex so that however much the base is filled with food, that food does not touch the lid. This convex shape also permits the existence of a mass of air that facilitates perfect cooking of the food.

Also advantageously, the lid of the receptacle is transparent so that there is a perfectly good view of the food through it.

The base can be made of any material that resists the aforesaid range of temperatures. It is preferably ceramic, though it can be made of glass.

Advantageously, the base includes a perimetral rim around its mouth and the lid has a lower flange that fits onto said rim. This arrangement permits a perfect fit of the lid onto the base.

Advantageously, both the end of the perimetral rim of the base and the lower flange of the lid form an acute angle, that of the flange being slightly smaller. Thanks to the acute angle of the flange being smaller, the flange exerts a force against the perimetral rim of the base that helps to secure the lid.

Another characteristic of the receptacle of the invention consists in the lower flange of the lid having a lip at its end to ensure fixing of the lid onto the base.

Finally, another characteristic consists in the lid including an exterior flange separate from the aforesaid lower flange in order to facilitate opening of the receptacle.

When the exterior flange is bent upwards the lower flange opens and releases the lid from the base.

### BRIEF DESCRIPTION OF THE DRAWINGS

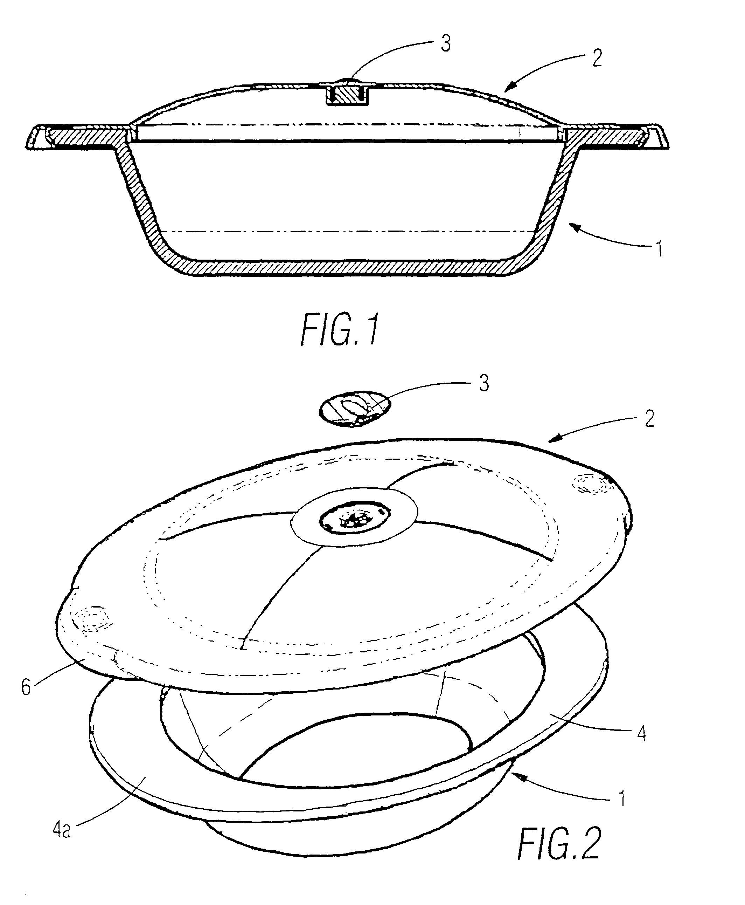

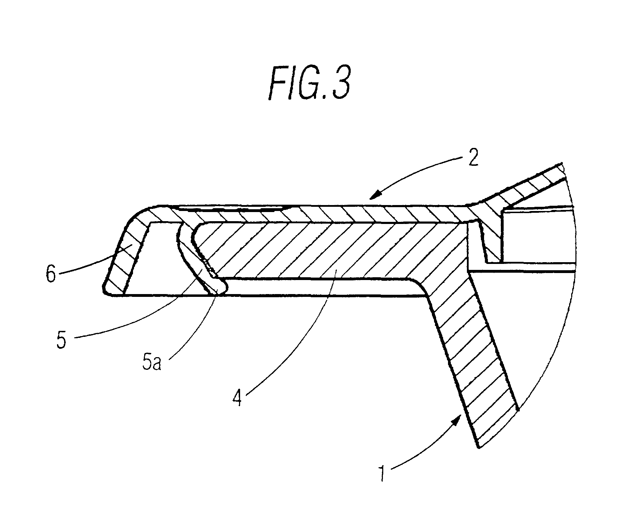

Figure 1 is a longitudinal-section view of the receptacle of the invention; Figure 2 is a perspective view of the lid separated from the base; and Figure 3 is a detail of the zone at which the lid fits onto the base.

### DESCRIPTION OF A PREFERRED EMBODIMENT OF THE INVENTION

As can be seen in the figures, the receptacle of the invention includes a base 1 to contain the food and a lid 2 which fits onto said base 1.

The base 1 is rigid and the lid 2 is flexible, which permits the lid 2 to fit tightly onto the base 1.

In Figure 1 it can be seen that the lid 2 includes a valve 3 to permit outlet of the gases that form inside the receptacle. It can also be seen that the lid is convex in order to prevent contact with the food and permit the existence of a mass of air that facilitates cooking.

In Figure 2 the lid 2 is shown separated from the base 1 and the valve 3 separated from the lid 2.

According to a preferred embodiment of the invention the lid is transparent so that the food inside the receptacle can be seen.

The base 1 includes a perimetral rim 4 around its mouth.

As Figure 2 shows, the receptacle has a plan section that is noticeably elliptical, with a larger longitudinal axis and a smaller transverse axis. From this figure it can be seen that the perimetral rim 4 is of unequal width, wider on the longitudinal axis and narrower on the transverse access.

The wider zone 4a of the aforesaid rim 4 serves as a handle.

In Figure 3 it can be seen that the lid 2 includes a lower flange 5 which fits onto the perimetral rim 4 thanks to the flexibility of the material of which it is composed.

In said figure it can be seen that both the end of the perimetral rim of the base 1 and the lower flange 5 of the lid 2 form an acute angle, and the lower flange has a lip 5a at its end to ensure secure attachment of the lid 2 to the base 1.

The lid 2 also includes an exterior flange 6 separate from the aforesaid lower flange 5 in order to facilitate opening of the receptacle.

Both the base 1 and the lid 2 are made of a material that resists temperatures lying within the range -50°C to 300°C.

According to a preferred embodiment of the invention, the material of the base 1 is ceramic, though it could also be glass or any other rigid material which withstands the range of temperatures described.

## Claims

1. A receptacle for cooking foods, comprising a base (1) for containing the foods and a lid (2) which fits onto that base (1), wherein the base (1) is rigid and the lid (2) is elastic, and **characterized in that** both base (1) and lid (2) are made of materials resistant to temperatures within the range of -50°C and 300°C, the lid (2) being of silicone, and the seal between the lid (2) and the base (1) being hermetic due to the elasticity of the lid (2).

2. The receptacle as claimed in Claim 1, wherein the lid (2) includes a valve (3) that permits outlet of the gases that form inside the receptacle.

3. The receptacle as claimed in Claim 1, wherein the lid (2) is convex.

4. The receptacle as claimed in Claim 1, wherein the lid (2) is transparent.

5. The receptacle as claimed in Claim 1, wherein the base (1) is made of glass.

6. The receptacle as claimed in Claim 1, wherein the base (1) is ceramic.

7. The receptacle as claimed in Claim 1, wherein the base (1) includes a perimetral rim (4) around its mouth and the lid has a lower flange (5) that fits onto said rim (4).

8. The receptacle as claimed in Claim 7, wherein both the end of the perimetral rim (4) of the base (1) and the lower flange (5) of the lid (2) form an acute angle, that of the flange (5) being slightly smaller.

9. The receptacle as claimed in Claim 7, wherein the lower flange (5) of the lid (2) has a lip (5a) at its end to ensure fixing of the lid (2) onto the base (1).

10. The receptacle as claimed in Claim 7, wherein the lid (2) includes an exterior flange (6) separate from the aforesaid lower flange (5) in order to facilitate opening of the receptacle.

## Patentansprüche

1. Gefäß zum Kochen von Nahrungsmitteln mit einem Grundteil (1) zur Aufnahme der Nahrungsmittel und einem Deckel (2), der auf das Grundteil (1) paßt, wobei das Grundteil (1) starr und der Deckel (2) elastisch ist, **dadurch gekennzeichnet, daß** sowohl das Grundteil (1) als auch der Deckel (2) aus Materialien hergestellt sind, die temperaturresistent innerhalb des Bereichs von -50°C bis 300°C sind, wobei der Deckel (1) aus Silikon und die Dichtung zwischen dem Deckel (2) und dem Grundteil (1) aufgrund der Elastizität des Deckels (2) luftdicht ist.

2. Gefäß nach Anspruch 1, wobei der Deckel (2) ein Ventil (3) aufweist, das den Austritt von Gasen aus dem Inneren des Gefäßes ermöglicht.

3. Gefäß nach Anspruch 1, wobei der Deckel (2) konvex ist.

4. Gefäß nach Anspruch 1, wobei der Deckel (2) transparent ist.

5. Gefäß nach Anspruch 1, wobei das Grundteil (1) aus Glas hergestellt ist.

6. Gefäß nach Anspruch 1, wobei das Grundteil (1) keramisch ist.

7. Gefäß nach Anspruch 1, wobei das Grundteil (1) in seiner Öffnung einen umlaufenden nach außen umgebogenen Rand (4) besitzt und der Deckel einen unteren Flansch (5) aufweist, der auf den Rand (4) paßt.

8. Gefäß nach Anspruch 7, bei dem sowohl das Ende des umlaufenden nach außen umgebogenen Randes (4) des Grundteils (1) als auch das Ende des unteren Flansches (5) des Deckels (2) einen spitzen Winkel bilden, wobei der des Flansches (5) geringfügig kleiner ist.

9. Gefäß nach Anspruch 7, bei dem der untere Flansch (5) des Deckels (2) eine Lippe (5a) an seinem Ende zur Gewährleistung der Befestigung des Deckels (2) auf dem Grundteil (1) aufweist.

10. Gefäß nach Anspruch 7, bei dem der Deckel (2) einen äußeren Flansch (6) getrennt von dem vorerwähnten unteren Flansch (5) zur Erleichterung des Öffnens des Gefäßes aufweist.

## Revendications

1. Récipient pour la cuisson des aliments, comprenant une base (1) pour contenir les aliments et un couvercle (2) qui s'adapte sur cette base (1), dans lequel la base (1) est rigide et le couvercle (2) est élastique, et **caractérisé en ce que** la base (1) et le couvercle (2) sont tous deux conçus dans des matériaux pouvant résister à des températures variant entre -50°C et 300°C, le couvercle (2) étant en silicone, et le joint entre le couvercle (2) et la base (1) étant rendu hermétique par l'élasticité du couvercle (2).

2. Récipient selon la revendication 1, dans lequel le couvercle (2) comprend une soupape (3) qui permet l'échappement des gaz qui se forment à l'intérieur du récipient.

3. Récipient selon la revendication 1, dans lequel le couvercle (2) est convexe.

4. Récipient selon la revendication 1, dans lequel le couvercle (2) est transparent.

5. Récipient selon la revendication 1, dans lequel la base (1) est en verre.

6. Récipient selon la revendication 1, dans lequel la base (1) est en céramique.

7. Récipient selon la revendication 1, dans lequel la base (1) comprend un rebord périphérique (4) autour de son ouverture et le couvercle possède une collerette inférieure (5) qui s'adapte sur ledit rebord.

8. Récipient selon la revendication 7, dans lequel l'extrémité du rebord périphérique (4) de la base (1) et la collerette inférieure (5) du couvercle (2) forment toutes deux un angle aigu, celui de la collerette (5) étant légèrement plus petit.

9. Récipient selon la revendication 7, dans lequel la collerette inférieure (5) du couvercle (2) possède une protubérance (5a) à son extrémité afin d'assurer le maintien du couvercle (2) sur la base (1).

10. Récipient selon la revendication 7, dans lequel le couvercle (2) comprend une collerette extérieure (6) distincte de la collerette inférieure (5) susmentionnée afin de faciliter l'ouverture du récipient.
